# EUROPÄISCHE PATENTANMELDUNG

(11) **EP 4 650 739 A1**
(43) Veröffentlichungstag der Anmeldung: **19.11.2025**
(21) Anmeldenummer: 24176729.2
(22) Anmeldetag: 17.05.2024
(51) Int. Cl.: G01L 5/107, G01L 5/102, G01L 5/106

(54) **VORRICHTUNG ZUM ERFASSEN DER BANDSPANNUNG EINES GURTBANDES**

(71) Anmelder: Westdeutscher Drahtseil-Verkauf Dolezych GmbH & Co. KG, 44147 Dortmund (DE)
(72) Erfinder: DERSEN, Till, 59069 HAM (DE); STROMBERG, Tom, 45711 DATTELN (DE)
(74) Vertreter: Andrejewski - Honke Patent- und Rechtsanwälte Partnerschaft mbB

(57) **Zusammenfassung**

Gegenstand der Erfindung ist eine Vorrichtung zum Erfassen der Bandspannung eines Gurtbandes, insbesondere eines Zurrgurtes (1). Dazu ist die Vorrichtung mit einem gegen eine Bandoberfläche anstellbaren Messfühler (2), und mit einem dem Messfühler (2) zugeordneten Sensor (3) ausgerüstet. Der Sensor (3) erfasst eine auf den Messfühler (2) ausgeübte Kraft, die zu einer Auslenkung des Gurtbandes durch den Messfühler (2) korrespondiert. Dazu wird das Gurtband zwischen zwei ortsfesten Führungselementen (9) und dem dazwischen angeordneten Messfühler (2) geführt. Erfindungsgemäß wird der Messfühler (2) aus einer das Gurtband unauslenkenden Ruheposition in eine das Gurtband auslenkende Messposition verschwenkt.

## Beschreibung

Die Erfindung betrifft eine Vorrichtung zum Erfassen der Bandspannung eines Gurtbandes, insbesondere eines Zurrgurtes, mit einem gegen eine Bandoberfläche anstellbaren Messfühler, und mit einem dem Messfühler zugeordneten Sensor, wobei der Sensor eine auf den Messfühler ausgeübte Kraft erfasst, die zu einer in der Regel spannungsproportionalen Auslenkung des Gurtbandes durch den Messfühler korrespondiert, und wobei das Gurtband dazu zwischen zwei ortsfesten Führungselementen und dem dazwischen angeordneten Messfühler geführt respektive eingeklemmt wird.

Vorrichtungen zum Erfassen der Bandspannung eines Gurtbandes werden zunehmend insbesondere aus Sicherheitsgründen eingesetzt. Denn wenn beispielsweise Fahrzeuge oder schwergewichtige Güter mithilfe eines Zurrgurtes auf einer Transportoberfläche festgelegt werden, besteht die Gefahr infolge des Transportverlaufes, dass Zurrgurte die zuvor eingeleitete Kraft verlieren. Dies führt dazu, dass die durchgeführte und zuvor realisierte Ladungssicherung nicht mehr ordnungsgemäß ausgeführt ist. Vor Antritt des Fahrtverlaufes sollte demgegenüber zur Sicherheit die eingebrachte Bandspannung gemessen werden, um bei Problemen, wie beispielsweise einer zu geringen Bandspannung, entsprechende Sicherheitsmaßnahmen einzuleiten

Beim gattungsbildenden Stand der Technik nach der auf die Anmelderin zurückgehenden EP 3 746 757 B1 wird der dortige Messfühler bzw. das Messelement mithilfe einer entlang einer Steuerkurve verfahrbaren Handhabe an das Gurtband angestellt. Bei dem Sensor handelt es sich um einen auf Verformungen eines Messsteges reagierenden Dehnungsmessstreifen. Außerdem ist eine Steuereinheit zur Auswertung von Signalen des Sensors vorgesehen. Mithilfe einer an die Steuereinheit angeschlossenen Sende-/Empfangseinheit können die mithilfe der Steuereinheit erfassten Werte für die Verformung des Messsteges und die daraus abgeleiteten Werte der Bandspannung des Gurtbandes an einen externen Empfänger bzw. eine Auswerteeinheit übermittelt werden. Das hat sich grundsätzlich bewährt, um zugleich die Möglichkeit zu eröffnen, die erfassten Werte der Bandspannung elektronisch auswerten zu können.

Daneben gibt es aber auch überwiegend stationär arbeitende Vorrichtungen, die zum Erfassen der Bandspannung und ihrer unmittelbaren Anzeige geeignet und eingerichtet sind. Ein Beispiel hierfür stellt das Vorspannkraftmessgerät nach der Gebrauchsmusterschrift DE 20 2012 000 494 U1 dar. Hier ist neben den beiden ortsfesten Führungselementen ein weiteres drittes Spanngurtführungselement vorgesehen, welches sich in einer Richtung senkrecht zur durch die beiden ortsfesten Führungselemente definierten Ebene bewegen lässt. Mit dem fraglichen dritten Spanngurtführungselement ist ein elastischer Biegeträger verbunden, der mit einem Messelement zur Messung der Verformung des Biegeträgers ausgerüstet ist. Als Messelement kommt ein Dehnungsmessstreifen zum Einsatz. Außerdem ist ein Rechenmodul zur Berechnung der Spannkraft aus den Messwerten des Messelementes vorgesehen. Das Rechenmodul ist mit einer Anzeige verbunden, auf welcher die ermittelte Spannkraft angezeigt wird. Außerdem ist als Stromversorgung eine Batterie vorgesehen.

Der Stand der Technik hat sich grundsätzlich bewährt, was die Möglichkeit zur direkten Anzeige oder auch elektronischen Weiterverarbeitung von Messwerten für die ermittelte Spannkraft bzw. Vorspannkraft angeht. Allerdings beruhen die bekannten Lösungen typischerweise auf Biegeverformungen von Messfühlern, die dann ihrerseits im Sensor in Gestalt eines oder mehrerer Dehnungsmessstreifen ein entsprechendes Signal erzeugen. Solche Dehnungsmessstreifen funktionieren zwar zuverlässig, sind jedoch mit Messfehlern behaftet, wenn die Krafteinleitung schräg oder abweichend von einer Vorzugsrichtung erfolgt. Hinzukommt, dass beispielsweise bei dem Vorspannmessgerät nach der DE 20 2012 000 494 U1 das dritte Spanngurtführungselement zusammen mit dem Messelement unter Verformung des zugehörigen Biegeträgers bereits beim Einschlaufen des Gurtbandes beaufschlagt wird. Hieraus können unter Umständen Beschädigungen insbesondere im rauen Praxisbetrieb resultieren. Außerdem ist die Anbringung bei einem gespannten Gurtband unter Umständen schwierig. Hier will die Erfindung insgesamt Abhilfe schaffen.

Der Erfindung liegt das technische Problem zugrunde, eine derartige Vorrichtung zum Erfassen der Bandspannung eines Gurtbandes so weiterzuentwickeln, dass eine robuste Lösung zur Verfügung gestellt wird, die sich einfach in ein gespanntes Gurtband einschlaufen lässt und deren Messwerte zuverlässig Auskunft über die jeweils gemessene Bandspannung geben.

Zur Lösung dieser technischen Problemstellung ist eine gattungsgemäße Vorrichtung zum Erfassen der Bandspannung eines Gurtbandes im Rahmen der Erfindung dadurch gekennzeichnet, dass der Messfühler aus einer das Gurtband unauslenkenden Ruheposition in eine des Gurtband auslenkenden Messposition schwenkbar ausgebildet ist.

Im Rahmen der Erfindung wird also zunächst einmal und in Abkehr vom zuvor referierten Stand der Technik so vorgegangen, dass sich der Messfühler überhaupt und grundsätzlich in einer Ruheposition befindet. In dieser Ruheposition wird das Gurtband unausgelenkt belassen, erfährt also keine Beaufschlagung durch den Messfühler. In entsprechendem Sinne kann auch der Sensor in dieser Ruheposition nicht über den Messfühler beaufschlagt werden und erfährt dementsprechend auch keinerlei Beschädigung oder Kraftbeaufschlagung. In dieser Ruheposition kann die gesamte Vorrichtung an dem gespannten Gurtband angebracht und befestigt werden.

Ausgehend von dieser das Gurtband unauslenkenden Ruheposition wird nun der Messfühler in die das Gurtband auslenkende Messposition überführt. Das geschieht durch eine Schwenkbewegung, weil der Messfühler hierzu schwenkbar ausgebildet ist, nämlich ausgehend von der Ruheposition in die Messposition. Bei dieser Schwenkbewegung handelt es sich um eine allgemeine und grundsätzliche Schwenkbewegung, also eine Bewegung des Messfühlers entlang eines Bogens, der nicht notwendigerweise ein Kreisbogen ist oder sein muss. Denn grundsätzlich kann sich der Messfühler auch entlang eines spiralförmigen oder elliptischen Bogens bewegen.

In jedem Fall korrespondiert die Messposition dazu, dass der Messfühler das Gurtband auslenkt, und zwar spannungsproportional. D.h., die Auslenkung des Messfühlers erfolgt in der Regel proportional zur Spannung im Gurtband. Anders ausgedrückt, erzeugt das unter Spannung stehende Gurtband eine Auslenkung des Messfühlers, die zur mithilfe des Messfühlers aufgebauten Kraft proportional ist, um die Auslenkung überhaupt bewirken zu können. Die Spannkraft im Gurtband führt also dazu, dass der Messfühler der durch ihn verursachten Auslenkung eine Rückstellkraft entgegensetzt, die mithilfe des Sensors gemessen wird und folglich Auskunft über die Spannkraft bzw. Vorspannkraft im Gurtband gibt.

Die Auslenkung des Messfühlers und dessen Lagerung ist dabei erfindungsgemäß derart ausgebildet, dass das Gurtband trotz eingenommener Messposition beweglich an dem Messfühler anliegt. Dass lässt sich im Wesentlichen darauf zurückführen, dass es sich bei dem Messfühler im Allgemeinen um einen solchen handelt, welcher um eine Achse radial schwenkbar gelagert ist. Außerdem ist der Messfühler vorteilhaft als drehbare Auslenkwelle ausgebildet.

Dadurch kommt es zu der beschriebenen grundsätzlichen Beweglichkeit des Gurtbandes gegenüber dem Messfühler, und zwar auch und insbesondere in der Messposition. Als Folge hiervor wird eine im Vergleich zum Stand der Technik höhere Genauigkeit beobachtet. Denn dadurch (durch die geschilderte Beweglichkeit) kommt es nicht zu einem Verklemmen des Gurtbandes. Hierdurch lassen sich auch etwaige das Signal des Sensors beeinflussende Störgrößen praktisch eliminieren. Als Folge hiervon ermöglicht die erfindungsgemäße Vorrichtung auch die Messungen von erhöhten Spannkräften. Eine solche Erhöhung der Spannkraft war bisher im Stand der Technik nicht möglich, weil es oftmals zu Verklemmungen zwischen dem Gurtband und dem Messfühler gekommen ist.

Zu diesem Zweck kann es sich bei dem Sensor um einen Kraftsensor, einen Drucksensor oder auch einen Verformungssensor wie beispielsweise einen Dehnungsmessstreifen handeln. Grundsätzlich sind auch Kombinationen denkbar. Im einfachsten Fall mag sich der Messfühler auf einem Kraftsensor abstützen, der auf diese Weise die zuvor bereits angesprochene Rückstellkraft misst und damit Auskunft über die Spannkraft im Gurtband gibt.

Dazu kann das Signal des Sensors an eine Steuereinheit übermittelt werden. Die Steuereinheit kann in einem Gehäuse als Bestandteil der erfindungsgemäßen Vorrichtung angeordnet werden, welches meistens auch eine Anzeigeeinheit und eine elektrische Energieversorgung in Gestalt beispielsweise einer Batterie beinhaltet. Dann werden die Signale des Sensors an die Steuereinheit über ein entsprechendes Verbindungskabel weitergeleitet. Selbstverständlich liegt es auch im Rahmen der Erfindung, alternativ oder zusätzlich die Signale des Sensors drahtlos an eine beispielsweise mobile Steuereinheit weiterzuleiten. In diesem Fall kann der hierfür erforderliche Datenverkehr mithilfe üblicher Standards wie beispielsweise Bluetooth erfolgen. Auch besteht die Möglichkeit, die Steuereinheit in einem tragbaren Gerät wie beispielsweise einem Funktelefon zu verorten, welches mit seinem zugehörigen Display als kombinierte Steuereinheit und Anzeigeeinheit für die erfindungsgemäße Vorrichtung fungiert.

So oder so gibt die Steuereinheit die entsprechende und ermittelte Spannkraft beispielsweise über die Anzeigeeinheit aus, so dass ein Bediener die Spannkraft im Gurtband unmittelbar an der Anzeigeeinheit ablesen kann. Zur elektrischen Versorgung der Steuereinheit ebenso wie der Anzeigeeinheit und des Sensors ist dabei typischerweise der zuvor bereits angesprochene Akkumulator vorgesehen, wie dies nachfolgend mit Bezug zum Ausführungsbeispiel noch näher erläutert wird.

Der Messfühler ist im Allgemeinen um eine Achse radial schwenkbar gelagert. D.h., die zuvor beschriebene und allgemein ausgebildete Schwenkbewegung des Messfühlers ausgehend von der Ruheposition in die Messposition ist in der Regel eine radiale Schwenkbewegung. Dazu wird die zugehörige Achse meistens von einer in einem Gehäuse gelagerten Zentralwelle definiert. Diese Zentralwelle mag dabei zu einem schwenkbaren Handhebel gehören. Das Gehäuse ist seinerseits in der Regel rechteckförmig gestaltet und verfügt über zwei Seitenwangen in Längsrichtung, mit deren Hilfe die ortsfesten Führungselemente gelagert werden können.

Tatsächlich ist die Auslegung meistens so getroffen, dass sich die zwei ortsfesten Führungselemente zwischen den Seitenwangen des Gehäuses erstrecken. Die Breite des Gehäuses und damit die Länge der beiden ortsfesten Führungselemente ist dabei jeweils an die Breite des zu überprüfenden Gurtbandes angepasst bzw. überschreitet diese, damit das Gurtband zwischen den beiden ortsfesten Führungselementen und dem dazwischen angeordneten Messfühler eingeschlauft werden kann.

Bei dem Messfühler handelt es sich besonders vorteilhaft um eine drehbare Auslenkwelle. Durch die Drehbarkeit sowohl der Auslenkwelle als auch der beiden ortsfesten Führungselemente wird sichergestellt, dass etwaige Reibkräfte minimiert werden. Außerdem lässt sich hierdurch das Gurtband besonders einfach und kraftarm einschlaufen. Die beiden ortsfesten Führungselemente sind dabei jeweils gegenüber den beiden sich gegenüberliegenden Seitenwangen drehbar gelagert. Der Messfühler bzw. die an dieser Stelle vorteilhaft vorgesehene drehbare Auslenkwelle erfährt dagegen eine drehbare Lagerung gegenüber einer Zahnscheibe. Dabei ist die Auslegung weiter so getroffen, dass die Zentralwelle und die Auslenkwelle über die zumindest eine Zahnscheibe miteinander gekoppelt sind.

Meistens sind zwei sich gegenüberliegende Zahnscheiben vorgesehen, die benachbart zu den beiden Seitenwangen des Gehäuses angeordnet sind. Für die Drehbarkeit der betreffenden Zahnscheibe gegenüber dem Gehäuse respektive den beiden sich gegenüberliegenden Seitenwangen sorgt dabei im Allgemeinen die Zentralwelle. D.h., die Zentralwelle fungiert als Achse für die eine bzw. die beiden Zahnscheiben.

Die Zentralwelle ist ihrerseits an den zuvor bereits angesprochenen schwenkbaren Handhebel angeschlossen. Dadurch kann der schwenkbare Handhebel als Antrieb für die Zahnscheibe fungieren und realisiert werden. Tatsächlich ist die Auslegung meistens so getroffen, dass der Handhebel U-förmig ausgebildet ist und mit seinen beiden Hebelwangen die Seitenwangen des Gehäuses übergreift. Beide Hebelwangen sind dabei durch die Zentralwelle miteinander gekoppelt. Dadurch kann der Handhebel über die Zentralwelle gegenüber den Seitenwangen des Gehäuses und damit gegenüber dem Gehäuse verschwenkt werden, und zwar unter Berücksichtigung der durch die Zentralwelle definierten Achse respektive Drehachse. D.h., der Handhebel ist drehbar um die Zentralwelle im Gehäuse gelagert.

Der Handhebel ist nun seinerseits vorteilhaft mit einer Hebelsperrklinke ausgerüstet. Mithilfe der Hebelsperrklinke kann der Handhebel wahlweise eine Kopplung/Entkopplung des Handhebels mit der Zahnscheibe bewirken. Befindet sich die Hebelsperrklinke in ihrem gesperrten Zustand, so nimmt der Handhebel bei einer Schwenkbewegung um die Zentralwelle die Zahnscheibe bei dieser Drehbewegung mit. Demgegenüber korrespondiert der entsperrte Zustand der Hebelsperrklinke dazu, dass sich der Handhebel gegenüber der Zahnscheibe verschwenken lässt, und zwar ohne dass die Zahnscheibe hierbei selbst bewegt bzw. verschwenkt wird. Als Folge hiervon wird ein etwaiges Zurückschlagen des Handhebels vermieden. Dadurch lassen sich auch etwaige Verletzungen vermeiden.

Bei der Hebelsperrklinke handelt es sich typischerweise um einen manuell beaufschlagbaren Sperrschieber. Der Sperrschieber wird dabei in der Regel durch eine oder mehrere Federn, beispielsweise Schenkel- oder Spiralfedern, in eine Position beaufschlagt. Hierbei handelt es sich meistens um die Sperrposition des Sperrschiebers, aus der heraus der Sperrschieber bzw. die Hebelsperrklinke in der Regel manuell entsperrt werden muss. Dieser Sperrschieber erstreckt sich im Allgemeinen zwischen den beiden Hebelwangen. Dadurch kann der Sperrschieber mit den beiden Zahnscheiben beidseitig der Seitenwangen des Gehäuses jeweils wechselwirken, wie nachfolgend noch näher mit Bezug zum Ausführungsbeispiel erläutert wird.

Neben dieser Hebelsperrklinke ist meistens noch eine weitere Gehäusesperrklinke vorgesehen. Die Gehäusesperrklinke ist dabei im Gehäuse respektive in einer Seitenwange des Gehäuses gelagert, und zwar in Linearrichtung sowie federbeaufschlagt. Dabei kann mit zwei Gehäusesperrklinken in jeder Seitenwange des Gehäuses gearbeitet werden. Außerdem ist es denkbar, eine durchgängige Gehäusesperrklinke zu realisieren. So oder so kann die betreffende Gehäusesperrklinke mit der Zahnscheibe wechselwirken.

Tatsächlich sorgt die betreffende Gehäusesperrklinke im Regelfall dafür, dass die Zahnscheibe zumindest dann blockiert wird, wenn sich der Messfühler in der das Gurtband auslenkenden Messposition befindet. Dadurch wird eine vorher festgelegte und definierte Stellung des Messfühlers bzw. der Auslenkwelle in der Messposition zur Verfügung gestellt und kann reproduzierbar eingenommen werden.

Wenn nun ausgehend von dieser Messposition der Handhebel wieder in seine das Gurtband unauslenkende Ruheposition überführt werden soll, sorgt eine Kontur am Handhebel zur Steuerung der Gehäusesperrklinke dafür, dass diese von ihrem zuvor eingenommenen Zustand "gesperrt" in Bezug auf die Zahnscheibe in ihren Zustand "entsperrt" überführt wird. Das heißt, die Kontur zur Steuerung zur Steuerung dient folglich in Regel zur Entsperrung/Entsicherung der Gehäusesperrklinke. Das setzt zunächst voraus, dass nach erfolgter Messung und Verlassen der Messposition die Hebelsperrklinke entsperrt wird, welche zuvor beim Übergang von der Ruheposition in die Messposition dafür gesorgt hat, dass bei der hiermit einhergehenden Schwenkbewegung des Handhebels um die Zentralwelle hierbei die Auslenkwelle mithilfe der Zahnscheibe verschwenkt wird.

Kommt es nun zu der umgekehrten Bewegung, d.h. von der Messposition zur Ruheposition, so muss hierfür die Hebelsperrklinke entsperrt werden. Dadurch bleibt die Auslenkwelle zunächst in Anlage am Gurtband. Da der Handhebel bei diesem Vorgang von der Zahnscheibe mechanisch entkoppelt ist, werden etwaige Verletzungen verhindert, weil bei diesem Vorgang der Handhebel nicht umschlagen kann. Denn die Zahnscheibe ist hierbei zunächst und unverändert mithilfe der Gehäusesperrklinke in der Messposition arretiert.

Der Übergang des Handhebels von der Messposition in die Ruheposition sorgt nun über die Kontur am Handhebel zur Steuerung der Gehäusesperrklinke dafür, dass bei diesem Vorgang die Gehäusesperrklinke entriegelt wird. Dadurch kommt die Zahnscheibe von der Gehäusesperrklinke frei und kann die Auslenkwelle durch die im Gurtband befindliche Spannung ebenfalls in ihre das Gurtband unauslenkende Ruheposition übergehen. Dies wird dadurch unterstützt, dass die Hebelsperrklinke beim Übergang in die Ruheposition wieder in ihren gesperrten Zustand übergeht oder übergehen kann und hierbei die Zahnscheibe mitnimmt, welche ihrerseits die Auslenkwelle in die Ruheposition verschwenkt. Am Ende dieser Bewegung und bei erneut erreichter Ruheposition kann die gesamte Vorrichtung problemlos von dem (gespannten) Gurtband entfernt werden.

Das alles gelingt unter Berücksichtigung eines robusten und einfachen Aufbaus, weil die Vorrichtung in ihrer Ruheposition an das gespannte Gurtband angesetzt wird und in dieser Ruheposition auch von dem Gurtband wieder entfernt werden kann. Die Einnahme der jeweiligen Ruheposition erfolgt dabei ohne dass die Gefahr besteht, dass der in diesem Zusammenhang vorgesehene Handhebel unkontrollierte und insbesondere schlagende Bewegungen vollführen kann. Dadurch ist eine etwaige Verletzungsgefahr minimiert.

Außerdem lässt sich ein kompakter und mechanisch einfacher Aufbau realisieren, der die Handhabung vereinfacht. Hierzu trägt ergänzend der Umstand bei, dass sowohl der Sensor als auch die vorgesehene Steuereinheit und auch die Anzeigeeinheit insgesamt von einer aufladbaren Batterie im Gehäuse mit der erforderlichen elektrischen Energie versorgt werden. Bei der aufladbaren Batterie kann es sich um eine solche handeln, die beispielsweise über eine genormte Schnittstelle wie beispielsweise einen USB-C-Anschluss mit einer Spannungsversorgung geladen wird. Außerdem kann die erfindungsgemäße Vorrichtung bei einem etwaigen Nachspannen des Gurtbandes und insbesondere des Zurrgurtes auf dem Gurtband verbleiben. Dadurch lässt sich die eingeleitete und gegebenenfalls erhöhte Vorspannkraft unmittelbar mithilfe der Anzeigeeinheit verfolgen und anpassen. Hierin sind die wesentlichen Vorteile zu sehen.

Anschließend wird die Erfindung anhand einer lediglich ein Ausführungsbeispiel darstellenden Zeichnung näher erläutert; es zeigen:
- Fig. 1: die erfindungsgemäße Vorrichtung zum Erfassen der Bandspannung eines Gurtbandes perspektivisch in einer Übersicht,
- Fig. 2A, 2B: das Grundprinzip der Messung der Spannkraft im Gurtband
und
- Fig. 3A-3E: die Vorrichtung nach Fig. 1 in einer Seitenansicht in unterschiedlichen Funktionsstellungen.

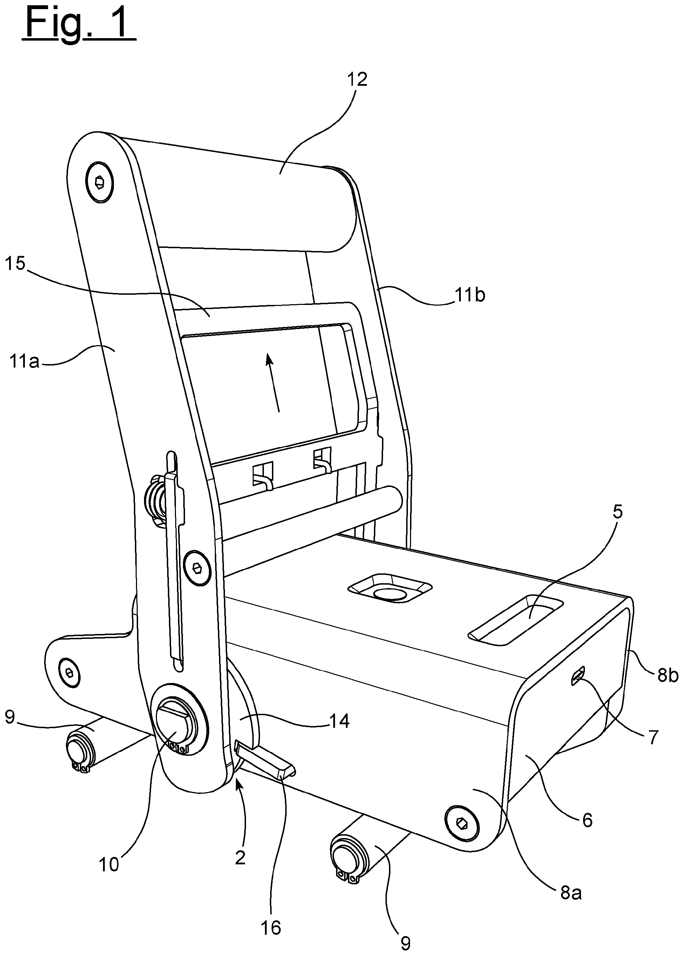

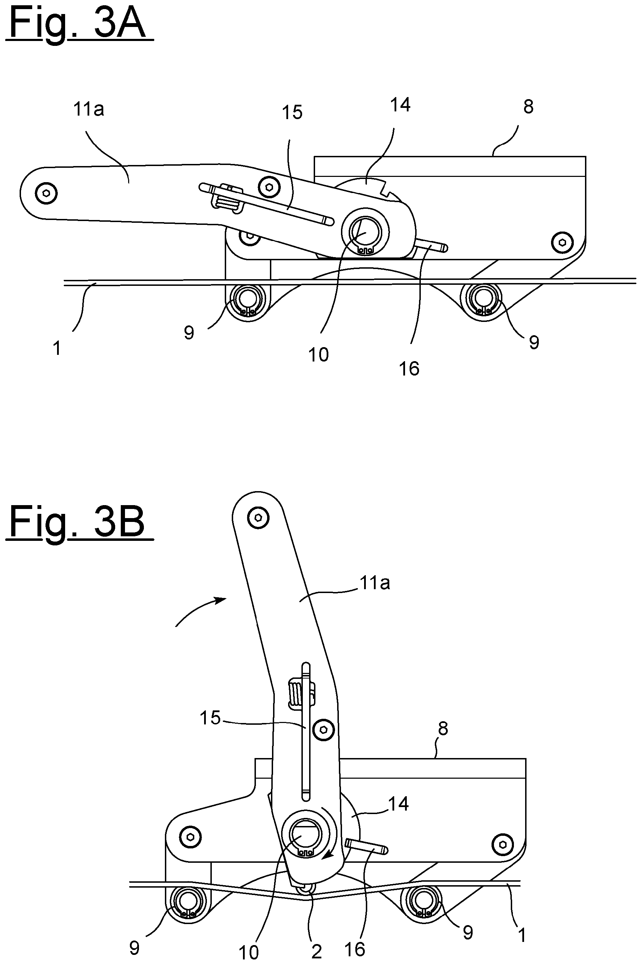

In der Fig. 1 ist in einer grundsätzlichen Übersicht eine Vorrichtung zum Erfassen der Bandspannung eines Gurtbandes dargestellt. Bei dem Gurtband handelt es sich um einen in den Fig. 3A-3E in Seitenansicht dargestellten Zurrgurt 1, also beispielhaft einen Kunststoffgewebegurt, welcher zwischen zwei Zurrpunkten mit einer nicht dargestellten Ladefläche über einen auf der Ladefläche festzuzurrenden Gegenstand geführt und gespannt wird. Für die erforderliche Spannung im Zurrgurt 1 mag dabei eine nicht gezeigte Ratsche bzw. Gurtratsche sorgen, wie sie beispielhaft in der US 4 199 182 beschrieben und dargestellt ist. Die im Zurrgurt 1 erzeugte Spannung bzw. sogenannte Vorspannkraft darf in der Regel bestimmte Werte nicht überschreiten, um Beschädigungen der Transportoberfläche, der Zurrpunkte oder des festzuzurrenden Gegenstandes zu vermeiden. Dazu ist es erforderlich, die Bandspannung des Gurtbandes zu erfassen, was mithilfe der in der Fig. 1 dargestellten Vorrichtung gelingt, die im Ausführungsbeispiel als digitaler Vorspannkraftanzeiger ausgebildet ist. Mit seiner Hilfe lassen sich Vorspannkräfte von beispielsweise 1000 daN und mehr messen und anzeigen.

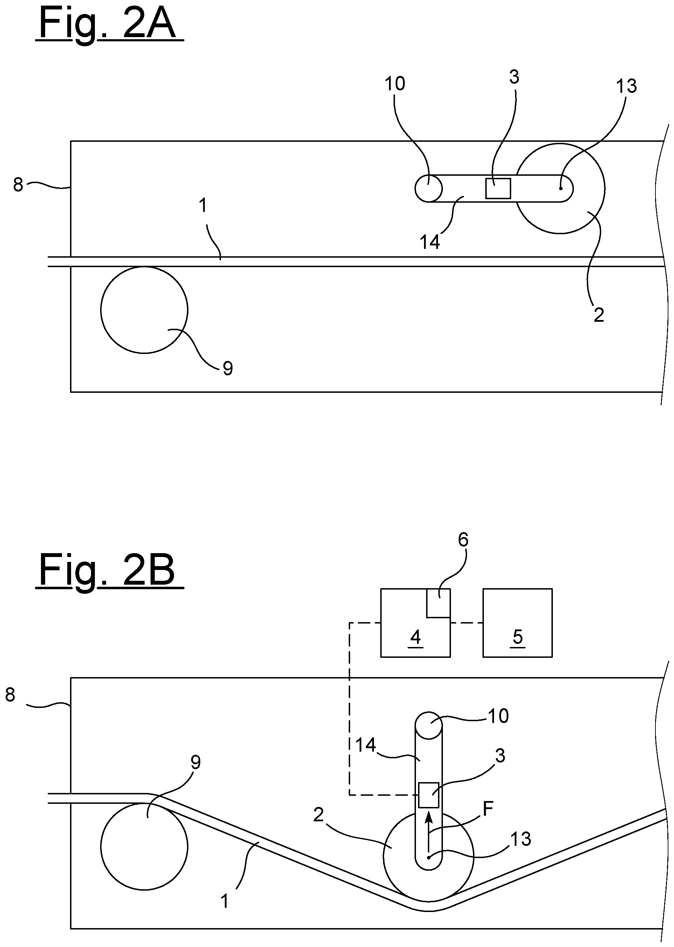

Zu diesem Zweck ist die Vorrichtung zum Erfassen der Bandspannung im Zurrgurt 1 bzw. der dargestellte digitale Vorspannkraftanzeiger zunächst einmal mit einem gegen eine Bandoberfläche des Zurrgurtes 1 anstellbaren Messfühler 2 ausgerüstet. Der Messfühler 2 und seine grundsätzliche und nachfolgend noch näher zu erläuternde Schwenkbewegung ist dabei in den Fig. 2A und 2B wiedergegeben. Die Fig. 2A zeigt dabei eine das Gurtband unauslenkende Ruheposition, während die Fig. 2B zu einer das Gurtband auslenkenden Messposition des Messfühlers 2 korrespondiert.

Dem Messfühler 2 ist dabei ein Sensor 3 zugeordnet, dessen Sensorsignale von einer lediglich in den Fig. 2A und 2B dargestellten Steuereinheit 4 ausgewertet werden. Die Steuereinheit 4 gibt dabei die Messwerte über eine Anzeigeeinheit 5 wieder. Zusätzlich ist noch eine aufladbare Batterie bzw. ein Akkumulator 6 vorgesehen, mit dessen Hilfe der Sensor 3, die Steuereinheit 4 und die Anzeigeeinheit 5 jeweils mit der erforderlichen elektrischen Energie versorgt werden. Das Aufladen des aufladbaren Akkumulators bzw. der Batterie 6 erfolgt dabei über eine in der Fig. 1 zu erkennende Schnittstelle 7, bei der sich nach dem Ausführungsbeispiel um einen USB-Anschluss handelt oder handeln kann. Der Sensor 3 ist im Beispiel als Kraftsensor ausgebildet.

Auf den Messfühler 2 und damit den Sensor 3 wird in ausgelenktem Zustand des Zurrgurtes 1 entsprechend der Darstellung in der Fig. 2B eine hier angedeutete Kraft F ausgeübt, die proportional zur Spannkraft des Zurrgurtes 1 ausgebildet ist. Da sich der Sensor 3 und damit der Messfühler 2 an einem Gehäuse 8 abstützt und auf diese Weise eine entsprechende Rückstellkraft zur Verfügung stellt, kann über den Sensor 3 die Kraft F gemessen und mithilfe der Steuereinheit 4 hieraus die Spannkraft im Zurrgurt 1 abgeleitet und durch die Anzeigeeinheit 5 ausgegeben werden.

Das Gehäuse 8 ist seinerseits mit zwei Seitenwangen 8a und 8b in seiner Längsrichtung ausgerüstet. Außerdem ist die Auslegung so getroffen, dass das Gehäuse 8 im Innern die Steuereinheit 4, die Anzeigeeinheit 5 und den aufladbaren Akkumulator 6 aufnimmt. Ferner ist an die Seitenwangen 8a, 8b jeweils ein ortsfestes Führungselement 9 angeschlossen. Dabei ist die Auslegung insgesamt so getroffen, dass zwei zueinander beabstandete Führungselemente 9 vorgesehen sind, die sich zwischen den Seitenwangen 8a, 8b des Gehäuses 8 erstrecken und die Distanz zwischen den beiden Seitenwangen 8a, 8b überbrücken. Außerdem sind beide Führungselemente 9 jeweils drehbar an die zugehörige Seitenwange 8a, 8b angeschlossen. Zwischen den beiden ortsfesten Führungselementen 9 ist der bereits angesprochene Messfühler 2 angeordnet. Dabei erfasst der Sensor 3 die auf den Messfühler 2 ausgeübte Kraft F. Die Kraft F korrespondiert zu einer spannungsproportionalen Auslenkung des Gurtbandes bzw. Zurrgurtes 1 durch den Messfühler 2, wie man anhand der Fig. 2A und 2B nachvollziehen kann.

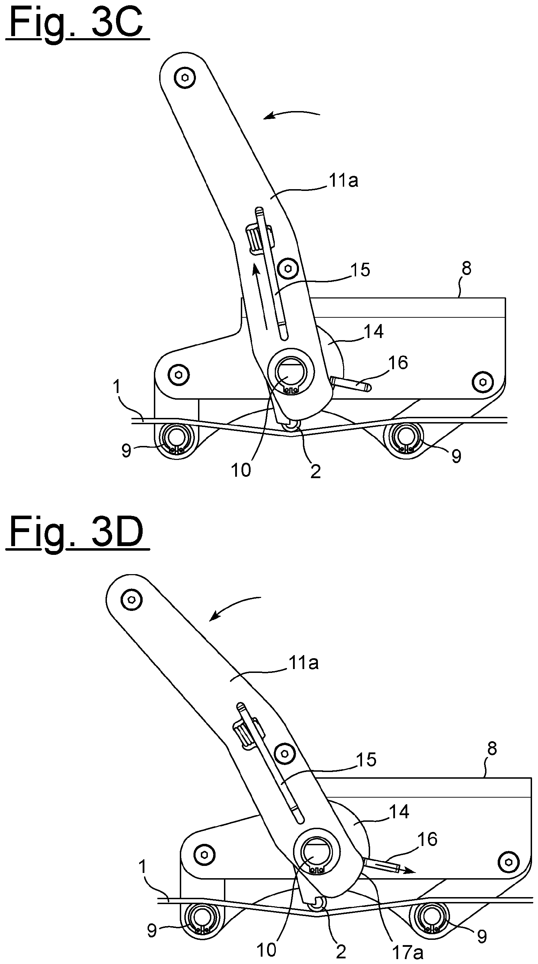

Zu diesem Zweck wird das Gurtband bzw. der Zurrgurt 1 zwischen den beiden ortsfesten Führungselementen 9 und dem dazwischen angeordneten Messfühler 2 geführt respektive eingeklemmt, und zwar zumindest in der in der Fig. 2B dargestellten Messposition, wie sie auch in den Fig. 3B und 3C dargestellt ist.

Der Messfühler 2 lässt sich dabei insgesamt und erfindungsgemäß aus der das Gurtband bzw. den Zurrgurt 1 unauslenkenden und in der Fig. 2A und 3A dargestellten Ruheposition in die das Gurtband respektive den Zurrgurt 1 auslenkenden Messposition überführen, wie sie Gegenstand der Fig. 2B (und 3B, 3C) ist. Der Übergang von der Ruheposition entsprechend der Darstellung in der Fig. 2A zur Messposition nach der Fig. 2B erfolgt dabei durch Verschwenken des Messfühlers 2, wie man anhand der Figurenabfolge der Fig. 2A und 2B unmittelbar nachvollziehen kann.

Zu diesem Zweck ist der Messfühler 2 um eine Achse 10 schwenkbar gelagert, und zwar radial schwenkbar. Bei der Achse 10 handelt es sich um eine im Gehäuse 8 gelagerte Zentralwelle 10. Tatsächlich ist die Auslegung nach dem Ausführungsbeispiel so getroffen, dass die fragliche Zentralwelle 10 einen U-förmigen Handhebel 11 bzw. dessen beide Hebelwangen 11a, 11b fußseitig miteinander verbindet. Dadurch erfährt der Handhebel 11 eine drehbare Lagerung im Gehäuse 8 respektive in dessen Seitenwangen 8a, 8b.

Anhand der Fig. 1 erkennt man, dass die Hebelwange 11a des Handhebels 11 benachbart zur Seitenwange 8a des Gehäuses 8 angeordnet ist. Dementsprechend findet sich die Hebelwange 11b des Handhebels 11 benachbart zur gegenüberliegenden weiteren zweiten Seitenwange 8b des Gehäuses 8. Wie bereits erläutert, werden die beiden Hebelwangen 11a, 11b fußseitig über die Zentralwelle 10 miteinander verbunden. Kopfseitig des Handhebels 11 ist dann noch eine Handhabe 12 vorgesehen, mit deren Hilfe ein Bediener den Handhebel 11 gegenüber dem Gehäuse 8 um die Zentralwelle 10 verschwenken kann.

Bei dem Messfühler 2 handelt es sich um eine drehbare Auslenkwelle 2. Tatsächlich ist die Auslenkwelle 2 um ihre Achse 13 drehbar gelagert. Dabei wird die fragliche Achse 13 für die drehbare Lagerung der Auslenkwelle 2 in einer die Zentralwelle 10 und die Auslenkwelle 2 miteinander koppelnden Zahnscheibe 14 definiert, die in den Fig. 2A und 2B lediglich schematisch angedeutet ist und die man anhand der Fig. 3A-3E in ihrer konkreten Ausgestaltung nachvollziehen kann. Die Zahnscheibe 14 ist ihrerseits drehbar im Gehäuse 8 gelagert. Tatsächlich fungiert die Zentralwelle 10 nicht nur als Lagerung für den gegenüber dem Gehäuse 8 schwenkbaren Handhebel 11, sondern auch als Lagerung bzw. Achse für die Zahnscheibe 14.

Der Handhebel 11 sorgt nun seinerseits für den Antrieb der Zahnscheibe 14. Dazu ist der Handhebel 11 nicht nur drehbar um die Zentralwelle 10 im Gehäuse 8 gelagert. Sondern der Handhebel 11 verfügt zusätzlich über eine Hebelsperrklinke 15, die nach dem Ausführungsbeispiel als manuell beaufschlagbarer Sperrschieber 15 ausgebildet ist. Auf diese Weise kann die Hebelsperrklinke 15 mit endseitigen Nasen in die Zahnscheibe 14 eingreifen respektive mit der Zahnscheibe 14 wechselwirken. Dabei ist die Auslegung zusätzlich noch so getroffen, dass jeweils zwei Zahnscheiben 14 zwischen den Hebelwangen 11a einerseits und der zugehörigen Seitenwange 8a bzw. zwischen der Hebelwange 11b und der betreffenden Seitenwangen 8b angeordnet sind. In diesen Zwischenraum taucht jeweils auch eine Nase der Hebelsperrklinke bzw. des Sperrschiebers 15 ein, sodass die Hebelsperrklinke 15 mit der betreffenden Zahnscheibe 14 wechselwirken kann. Die Hebelsperrklinke 15 lässt sich dabei dann entsperren, wenn die Hebelsperrklinke 15 manuell von dem Bediener "aufwärts" gegen die Kraft einer Feder gezogen wird, wie dies prinzipiell ein Pfeil in der Fig. 1 andeutet.

Anhand der Fig. 3A-3E erkennt man, dass zusätzlich zu der Hebelsperrklinke 15 noch eine Gehäusesperrklinke 16 vorgesehen ist. Grundsätzlich können auch zwei Gehäusesperrklinken 16 realisiert werden. So oder so ist die betreffende Gehäusesperrklinke 16 jeweils gegen die Kraft einer Feder in der zugehörigen Seitenwange 8a, 8b des Gehäuses 8 linear verschiebbar gelagert. Zur Steuerung der Gehäusesperrklinke 16 verfügt der Handhebel 11 über eine Kontur 17a, 17b. Dabei findet sich eine Kontur 17a an der Hebelwange 11a, wohingegen die weitere gegenüberliegende Kontur 17b an der Hebelwange 11b vorgesehen ist, und zwar jeweils fußseitig.

Die Funktionsweise kann am besten anhand der Darstellung in den Fig. 3A-3E nachvollzogen werden. In der Fig. 3A befindet sich der Messfühler bzw. die Auslenkwelle 2 und damit der dargestellte digitale Vorspannkraftanzeiger in seiner Ruheposition gemäß der Prinzipskizze in der Fig. 2A. In dieser Ruheposition kann die Vorrichtung problemlos auf den gespannten Zurrgurt 1 aufgeschoben werden. Dabei untergreifen die beiden ortsfesten Führungselemente 9 den Zurrgurt 1. Die ortsfesten Führungselemente 9 sind selbst drehbar an die Seitenwangen 8a, 8b des Gehäuses 8 angeschlossen, sodass etwaige Reibungskräfte auf ein Minimum reduziert sind.

Ausgehend von dieser Ruheposition in der Fig. 3A kann nun die Messposition eingenommen werden, wie sie in der Fig. 3B dargestellt ist. Hierzu korrespondiert eine Schwenkbewegung des Handhebels 11 um seine Achse bzw. die Zentralwelle 10 nach dem Ausführungsbeispiel im Uhrzeigersinn, und zwar um ca. 90°. Da bei diesem Vorgang die Hebelsperrklinke 15 in die zugehörige Zahnscheibe 14 bzw. die beiden sich gegenüberliegenden Zahnscheiben 14 eingreift, korrespondiert die zuvor beschriebene 90°-Uhrzeigersinnbewegung des Handhebels 11 dazu, dass bei diesem Vorgang der Messfühler bzw. die Auslenkwelle 2 ebenfalls eine 90°-Schwenkbewegung um die Achse respektive Zentralwelle 10 vollführt, wie sie schematisch beim Übergang von der Fig. 2A zur . 2B nachvollzogen werden kann. Das Erreichen der Messposition in der Fig. 3B wird begleitet durch einen hörbares Klicken oder Einrasten, was sich dadurch erklärt, dass die Gehäusesperrklinke 16 in eine entsprechende Rast der Zahnscheibe 14 eingreift, welche zur Einnahme der Messposition nach der Fig. 3B korrespondiert. Jetzt kann die Kraft F entsprechend der Darstellung in der Fig. 2B gemessen und mithilfe der Anzeigeeinheit 5 für einen Bediener sichtbar gemacht werden.

Nach der erfolgten Messung in der Funktionsstellung nach der Fig. 3B kann der Handhebel 11 durch eine Gegenuhrzeigersinnbewegung in Richtung auf die Ruheposition bewegt werden, wie man bei einer Abfolge der Fig. 3B und 3C nachvollziehen kann. Das setzt zunächst voraus, dass die Hebelsperrklinke 15 manuell betätigt wird, und zwar in der Pfeilrichtung nach der Fig. 1, wie sie auch in der Fig. 3C angedeutet ist. Dadurch wird der Handhebel 11 von der jeweiligen Zahnscheibe 14 mechanisch gelöst, weil die Zahnscheibe 14 nach wie vor mithilfe der Gehäusesperrklinke 16 blockiert wird. Auf diese Weise wird die Bewegung des Handhebels 11 von derjenigen der Auslenkwelle 2 und auch der Zahnscheibe 14 entkoppelt. Dadurch werden mögliche Verletzungen, welche durch ein etwaiges Umschlagen des Handhebels 11 auftreten können, ausgeschlossen.

Bei der weiteren Abfolge von der Fig. 3C zur Fig. 3D kommt es nun dazu, dass die beidseitigen Konturen 17a, 17b jeweils fußseitig der Hebelwangen 11a, 11b des Handhebels 11 auf die zugehörige Gehäusesperrklinke 16 arbeiten. Durch die Konturen 17a, 17b und die Schwenkbewegung des Handhebels 11 um die Zentralwelle 10 im Gegenuhrzeigersinn kommt es dazu, dass die betreffende Gehäusesperrklinke 16 gegen die Kraft einer Feder jeweils "nach rechts" in der Darstellung gemäß der Fig. 3C bewegt wird, und damit außer Eingriff mit der zugehörigen Zahnscheibe 14 kommt. Dementsprechend wird die Gehäusesperrklinke 16 entriegelt und gibt damit nicht nur die zugehörige Zahnscheibe 14 sondern auch die Auslenkwelle 2 frei.

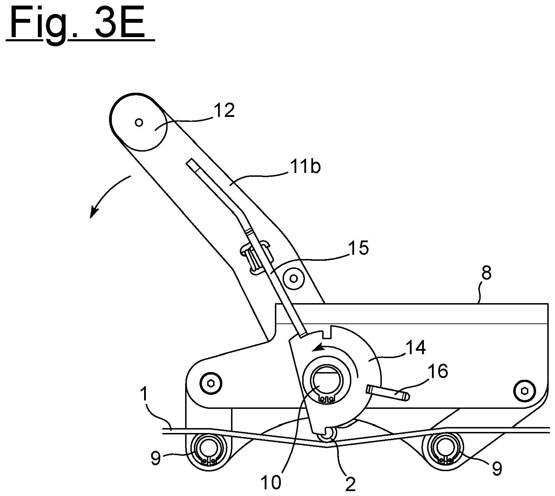

Bei weiter fortschreitender Schwenkbewegung des Handhebels 11 im Gegenuhrzeigersinn um die Zentralwelle 10 ausgehend von der Darstellung in der Fig. 3D im Übergang zur Fig. 3E sorgt die Gehäusesperrklinke 16 in ihrer nach der Beaufschlagung zur Entriegelung im Rahmen der Funktionsstellung in der Fig. 3D eingenommenen entsperrten Position dafür, dass bei der weiter fortschreitenden Gegenuhrzeigersinnbewegung des Handhebels 11 um die Zentralwelle 10 die Zahnscheibe 14 mitgenommen wird. Das stellt der in seine gesperrte Position übergehende Sperrschieber bzw. die Hebelsperrklinke 15 sicher. Dabei kann die Zahnscheibe 14 auch mitgenommen werden, weil sie von der zugehörigen Gehäusesperrklinke 16 frei ist. Das hat zur Folge, dass die Auslenkwelle 2 über die Zahnscheibe 14 respektive den Handhebel 11 mitgenommen wird und folglich die Auslenkwelle 2 wieder ihre Ausgangsposition entsprechend der Darstellung in der Fig. 3A einnehmen kann. Jetzt befindet sich die Vorrichtung erneut in ihrer Ruheposition nach der Fig. 3A und kann folglich von dem Zurrgurt 1 entfernt werden.

## Patentansprüche

1. Vorrichtung zum Erfassen der Bandspannung eines Gurtbandes, insbesondere eines Zurrgurtes (1), mit einem gegen eine Bandoberfläche anstellbaren Messfühler (2), und mit einem dem Messfühler (2) zugeordneten Sensor (3), wobei
der Sensor (3) eine auf den Messfühler (2) ausgeübte Kraft (F) erfasst, die zu einer Auslenkung des Gurtbandes durch den Messfühler (2) korrespondiert, und wobei
das Gurtband dazu zwischen zwei ortsfesten Führungselementen (9) und dem dazwischen angeordneten Messfühler (2) geführt wird,
**dadurch gekennzeichnet, dass**
der Messfühler (2) aus einer das Gurtband unauslenkenden Ruheposition in eine das Gurtband auslenkenden Messposition schwenkbar ausgebildet ist.

2. Vorrichtung nach Anspruch 1, **dadurch gekennzeichnet, dass** der Messfühler (2) um eine Achse (10) radial schwenkbar gelagert ist.

3. Vorrichtung nach Anspruch 2, **dadurch gekennzeichnet, dass** die Achse (10) von einer in einem Gehäuse (8) gelagerten Zentralwelle (10) definiert wird.

4. Vorrichtung nach einem der Ansprüche 1 bis 3, **dadurch gekennzeichnet, dass** der Messfühler (2) als drehbare Auslenkwelle (2) ausgebildet ist.

5. Vorrichtung nach einem der Ansprüche 1 bis 4, **dadurch gekennzeichnet, dass** die Zentralwelle (10) und die Auslenkwelle (2) über zumindest eine Zahnscheibe (14) miteinander gekoppelt sind.

6. Vorrichtung nach Anspruch 5, **dadurch gekennzeichnet, dass** die Zahnscheibe (14) im Gehäuse (8) drehbar gelagert ist.

7. Vorrichtung nach einem der Ansprüche 1 bis 6, **dadurch gekennzeichnet, dass** die Zentralwelle (10) als Achse (10) für die Zahnscheibe (14) fungiert.

8. Vorrichtung nach einem der Ansprüche 1 bis 7, **dadurch gekennzeichnet, dass** ein schwenkbarer Handhebel (11) als Antrieb für die Zahnscheibe (14) vorgesehen ist.

9. Vorrichtung nach Anspruch 8, **dadurch gekennzeichnet, dass** der Handhebel (11) drehbar um die Zentralwelle (10) im Gehäuse (8) gelagert ist.

10. Vorrichtung nach Anspruch 8 oder 9, **dadurch gekennzeichnet, dass** der Handhebel (11) mit einer Hebelsperrklinke (15) zur wahlweisen Kopplung/Entkopplung des Handhebels (11) mit der Zahnscheibe (14) ausgerüstet ist.

11. Vorrichtung nach Anspruch 10, **dadurch gekennzeichnet, dass** die Hebelsperrklinke (15) als manuell beaufschlagbarer Sperrschieber (15) ausgebildet ist.

12. Vorrichtung nach einem der Ansprüche 1 bis 11, **dadurch gekennzeichnet, dass** zusätzlich eine Gehäusesperrklinke (16) vorgesehen ist.

13. Vorrichtung nach Anspruch 12, **dadurch gekennzeichnet, dass** die Gehäusesperrklinke (16) mit der Zahnscheibe (14) wechselwirkt.

14. Vorrichtung nach Anspruch 12 oder 13, **dadurch gekennzeichnet, dass** zur Steuerung der Gehäusesperrklinke (16) eine Kontur (17a, 17b) am Handhebel (11) vorgesehen ist.

15. Verfahren zum Erfassen der Bandspannung eines Gurtbandes, insbesondere eines Zurrgurtes (1), wonach ein Messfühler (2) gegen eine Bandoberfläche angestellt wird und ein dem Messfühler (2) zugeordneter Sensor (3) eine auf den Messfühler (2) ausgeübte Kraft (F) erfasst, die zu einer Auslenkung des Gurtbandes durch den Messfühler (2) korrespondiert, und wonach das Gurtband dazu zwischen zwei ortsfesten Führungselementen (9) und dem dazwischen angeordneten Messfühler (2) geführt wird,
**dadurch gekennzeichnet, dass**
der Messfühler (2) aus einer das Gurtband unauslenkenden Ruheposition in eine das Gurtband auslenkende Messposition verschwenkt wird.

## Geänderte Patentansprüche

### Geänderte Patentansprüche gemäss Regel 137(2) EPÜ.

1. Vorrichtung zum Erfassen der Bandspannung eines Gurtbandes, insbesondere eines Zurrgurtes (1), mit einem gegen eine Bandoberfläche anstellbaren Messfühler (2), und mit einem dem Messfühler (2) zugeordneten Sensor (3), dessen Sensorsignale von einer Steuereinheit (4) ausgewertet werden, wobei
der Sensor (3) eine auf den Messfühler (2) ausgeübte Kraft (F) erfasst, die zu einer Auslenkung des Gurtbandes durch den Messfühler (2) korrespondiert, wobei ferner
das Gurtband dazu zwischen zwei ortsfesten Führungselementen (9) und dem dazwischen angeordneten Messfühler (2) geführt wird, wobei weiter
der Messfühler (2) aus einer das Gurtband unauslenkenden Ruheposition in eine das Gurtband auslenkende Messposition schwenkbar ausgebildet und um eine Achse (10) radial schwenkbar gelagert ist, und wobei
die Achse (10) von einer in einem Gehäuse (8) gelagerten Zentralwelle (10) definiert wird,
**dadurch gekennzeichnet, dass**
die Zentralwelle (10) einen U-förmigen Handhebel (11) bzw. dessen beide Hebelwangen (11b) fußseitig miteinander verbindet, wobei
der Handhebel (11) dadurch eine drehbare Lagerung am Gehäuse (8) respektive in dessen Seitenwangen (8a, 8b) erfährt, wobei ferner
die Steuereinheit (4) die Messwerte des Sensors (3) über eine Anzeigeeinheit (5) wiedergibt, wobei weiter
mithilfe eines Akkumulators (6) der Sensor (3), die Steuereinheit (4) und die Anzeigeeinheit (5) jeweils mit der erforderlichen elektrischen Energie versorgt werden, und wobei
das Gehäuse (8) die Steuereinheit (4), die Anzeigeeinheit (5) und den Akkumulator (6) beinhaltet.

2. Vorrichtung nach Anspruch 1, **dadurch gekennzeichnet, dass** der Messfühler (2) als drehbare Auslenkwelle (2) ausgebildet ist.

3. Vorrichtung nach einem der Anspruch 1 oder 2, **dadurch gekennzeichnet, dass** die Zentralwelle (10) und die Auslenkwelle (2) über zumindest eine Zahnscheibe (14) miteinander gekoppelt sind.

4. Vorrichtung nach Anspruch 3, **dadurch gekennzeichnet, dass** die Zahnscheibe (14) im Gehäuse (8) drehbar gelagert ist.

5. Vorrichtung nach einem der Ansprüche 1 bis 5, **dadurch gekennzeichnet, dass** die Zentralwelle (10) als Achse (10) für die Zahnscheibe (14) fungiert.

6. Vorrichtung nach einem der Ansprüche 1 bis 5, **dadurch gekennzeichnet, dass** der schwenkbare Handhebel (11) als Antrieb für die Zahnscheibe (14) vorgesehen ist.

7. Vorrichtung nach einem der Ansprüche 1 bis 6, **dadurch gekennzeichnet, dass** der Handhebel (11) mit einer Hebelsperrklinke (15) zur wahlweisen Kopplung/Entkopplung des Handhebels (11) mit der Zahnscheibe (14) ausgerüstet ist.

8. Vorrichtung nach Anspruch 7, **dadurch gekennzeichnet, dass** die Hebelsperrklinke (15) als manuell beaufschlagbarer Sperrschieber (15) ausgebildet ist.

9. Vorrichtung nach einem der Ansprüche 1 bis 8, **dadurch gekennzeichnet, dass** zusätzlich eine Gehäusesperrklinke (16) vorgesehen ist.

10. Vorrichtung nach Anspruch 9, **dadurch gekennzeichnet, dass** die Gehäusesperrklinke (16) mit der Zahnscheibe (14) wechselwirkt.

11. Vorrichtung nach Anspruch 9 oder 10, **dadurch gekennzeichnet, dass** zur Steuerung der Gehäusesperrklinke (16) eine Kontur (17a, 17b) am Handhebel (11) vorgesehen ist.
